## Europäisches Patentamt
## European Patent Office
## Office européen des brevets

(11) Publication number: **0 216 436 B1**

(12) EUROPEAN PATENT SPECIFICATION

(45) Date of publication of patent specification: 26.04.89

(51) Int. Cl.⁴: **C 04 B 35/00, B 22 F 3/10**

(21) Application number: 86201653.2

(22) Date of filing: 24.09.86

(54) Method for manufacturing a sintered product.

(30) Priority: 26.09.85 BE 2060802

(43) Date of publication of application:
01.04.87 Bulletin 87/14

(45) Publication of the grant of the patent:
26.04.89 Bulletin 89/17

(84) Designated Contracting States:
AT BE CH DE FR GB IT LI LU NL SE

(56) References cited:
EP-A-0 065 710
DE-A-1 817 588
DE-A-3 127 066
DE-C-3 200 582
GB-A- 897 689
US-A-3 926 656
US-A-4 404 166

E. KLAR: "Metals Handbook", 9th edition, vol. 7,
June 1984, pages 339-347, American Society
for Metals, Metals Park, Ohio, US

(73) Proprietor: "Studiecentrum voor Kernenergie",
"S.C.K."
Seny Park Charles Lemairestraat 1
B-1160 Brussel (BE)

(72) Inventor: Gilissen, Robert Eduard Maria
Ispralaan 55
B-2400 Mol (BE)
Inventor: Smolders, Armandus Georgius
Kloosterstraat 9
B-2491 Olmen (BE)
Inventor: Cooymans, Jozef Frans Constantia
St. Theresiastraat 60
B-2400 Mol (BE)

(74) Representative: Debrabandere, René et al
c/o Bureau De Rycker Charlottalei 48
B-2018 Antwerpen (BE)

## Description

This invention relates to a method for manufacturing a sintered product, which comprises:

—mixing a powder with 20 to 50 volume % as computed on the total resulting mixture, of an organic binder which is comprised at least partly of an organic material, susceptible to oxidizing-thermic decomposition,

—shaping the mixture to the required shape as a green powder agglomerate,

—removing at least partly the binder from said green powder agglomerate by heating same, and

—finally subjecting the green powder agglomerate to the sintering proper.

The powder may particularly be a metal powder, a ceramic powder or a so-called "cermet".

The organic binder makes shaping easier and gives the required ruggedness to the green powder agglomerate. When sintering, the presence of the binder has some drawbacks and may notably cause bursting. The binder should consequently preferably be removed from the green powder agglomerate before the sintering operation.

By oxidizing-thermic decomposition is meant a thermic decomposition wherein oxygen plays an active part in the decomposition. Under the influence of exclusively temperature the decomposition would be different, for instance slower, and the decomposition products would be different.

Binder materials susceptible to oxidizing-thermic decomposition are polymers such as high molecular polyethylene or some waxes. Such binder materials are opposed to so called heat-fugitive binders which are removed by evaporating or pure thermic decomposition.

The atmosphere during decomposition is of no importance. Such heat-fugitive binders are usually removed by melting and vaporizing as described in US—A—4 404 166 and DE—A—3 127 066.

The removing occurs under an air stream, which is considered as a chemically-neutral atmosphere enhancing evaporation. Oxidation is avoided, by replacing the air by argon when heating above a certain temperature or by limiting the temperature.

An usual way to remove a binder susceptible to oxidizing-thermic decomposition lies in heating the green powder agglomerate. The products resulting from the possible decomposition should be gas-like themselves or vaporize with the heating.

As with the heating the solid or fluid binder decomposes and gives gas-like products the volume and/or the pressure of the binder will increase. During the complete process, the cohesive forces of the agglomerate should be stronger than the inner pressure which is generated by the vaporizing or decomposition of the binder. When the process runs too fast due to a too-fast heating, the generated gas will be unable to escape fast enough from the agglomerate, whereby the agglomerate can swell, burst or flake off. Various methods have already been proposed to let the binder decomposition occur slowly, anyway under control.

A method of this kind is known from EP—A—0 065 710. According to said known method, a mixture is prepared from 80 to 90 weight-% silicium carbide and 10 to 20 weight-% of a mixture of polystyrene, wax and plastifier. The mixture is shaped to the shape required by injection-moulding and thereafter heated in the presence of air up to a temperature between 230 and 330°C. The wax is removed thereby and the polystyrene partly decomposed.

Said known method is however relatively slow. Heating under atmospheric air occurs for some thirty hours. Moreover, a part only, namely 20 to 60 weight-% of the polymer is removed from the binder.

The removing may be speeded-up by heating faster, but a faster heating brings a high danger of damaging the powder agglomerate.

The invention has for object to obviate the above-defined drawbacks and to provide a method for manufacturing a sintered product whereby removing the organic binder from the green powder agglomerate may be performed rather fast without any danger of damaging the powder agglomerate.

For this purpose, the binder is removed at least partly from the green powder agglomerate, by heating same in an atmosphere the oxygen concentration of which is higher than in the air.

It did appear surprisingly that it is thus possible to remove the binder completely from the agglomerate, faster and at a lower temperature than with the methods known up to now, and this without any damage occurring. This method runs counter to the prejudice against the presence of a great quantity of oxygen. It was known that at a same temperature the decomposition is faster in an atmosphere rich with oxygen than in the air and so it was expected that the risk of damaging the green agglomerate would increase with the increase of $O_2$ contents in the atmosphere. In order to avoid damaging, a reducing atmosphere or an inert atmosphere is mostly used.

This method is based on the following observations, even if the Applicant does not wish to bind the required protection to this explanation. The main cause of damaging the green powder agglomerate due to building-up an inner pressure, results from a different structure for the agglomerate surface layer. With the shaping techniques, there occurs due to the interaction between the powder-binder mixture on the one hand, and the die wall or shaping tool on the other hand, a finer porosity in the outermost layer. With heating, a gas pressure is build-up thereby in the agglomerate. It has been determined that when said outermost film is rubbed away, the binder may be subjected under air and without any danger of damaging the agglomerate, to heating rates which lead in agglomerates the outermost film of which has not been removed, to damaging of the outer layer.

The explanation thereof should presumably be looked for in the fact that the vapour pressure above the binder in fluid form is not only dependent on the properties of said binder, but also on the geometry and surface energy between the powder and the binder. For liquids which moisten the wall and lie in a capillary, the vapour pressure and thus also the vapourising rate will be lower as the capillary is narrower. When removing the binder in a powder agglomerate, this may result in the vapour pressure which is balanced with the fluid binder being much lower in the small pores from the surface layer than in the larger pores inside the mass. This results in the building-up of substantial gas pressures in the agglomerate core on a moment where the surface layer is not pervious enough for gas.

This latter is avoided by removing the binder from the surface layer before a high vapour pressure can build-up inside the agglomerate mass, which is obtained according to the invention by heating the agglomerate under an atmosphere the oxygen concentration of which is higher than the concentration in air. By heating thereof in an oxygen-enriched atmosphere, the binder in the surface layer of the green powder agglomerate is broken up already at a relatively low temperature and thus as heating begins. The decomposition products and the vapours which are formed in the surface layer can escape therefrom before too high a pressure is build-up by vaporizing and/or decomposition in the agglomerate core.

Removing a binder from a green powder agglomerate by heating in an oxygen atmosphere is known per se from GB—A—897 689. This patent does however pertain to a method whereby the binder being used is a heat-fugitive binder comprising as already mentioned materials which vaporize easily under heat action, such as waxes, paraffin, and volatile liquids such as polyvinyl alcohol and polyethylene glycol.

The amount binder is also extremely small, namely 0.1 to 6%. Due to said small amounts of binder the spaces between the powder particles of the green agglomerate are not completely filled with binder.

When manufacturing green powder agglomerates according to the invention markedly higher amounts binder are used, and the spaces between the powder particles of the green agglomerate are completely filled with binder.

In an useful embodiment of the invention, the binder is removed at least partly by heating the agglomerate in an atmosphere with an oxygen concetration of at least 40 vol.-%.

In a particular embodiment of the invention, the binder is removed at least partly by heating the agglomerate in an atmosphere of pure oxygen.

In a remarkable embodiment of the invention, the powder agglomerate is heated in two steps, namely a first step with a relatively fast temperature increase, and a second step with a slower temperature increase.

For example, there is heated during the first step with a temperature increase about 50°C per hour to about 100°C, and during the second step with a temperature increase of about 5°C per hour up to a temperature about 350°C.

Other features and advantages of the invention will stand out from the following description of embodiments of a method for removing an organic binder from a green powder agglomerate according to the invention; this description is only given by way of example and does not limit the invention.

For manufacturing a sintered product, one mixes 80 to 50 volume-% based on the total resulting mixture, of a metal powder, a ceramic powder, a so-called "cermet" or a mixture thereof, with 20 to 50 volume-% also based on the total resulting mixture, of a binder which is partly comprised of a powder-like polymer.

Besides the polymer, the binder may comprise one or more lubricants, one or more plastifiers, or one or more surfactants. More particularly the binder may comprise waxes, oils or stearin acid.

Use may be made as powder, of a powder of one or a plurality of the following materials: silicium, silicium nitride, aluminium oxide, stainless steel and silicium carbide.

When the powder is a Si containing powder, the amount of the binder lies usefully between 13 and 18 weight-% based on the mixture weight. The binder preferably comprises about 20 weight-% polymer.

Suitable polymers for the binder are polyethylene and polypropylene.

The mixture is then shaped to the desired shape by injection-moulding, in an usual way for powder metallurgy.

The major part of the binder is removed from the resulting powder agglomerates, by heating said powder agglomerate under an atmosphere which contains more oxygen than air.

One preferably heats under an atmosphere which contains at least 40 vol.-% oxygen.

It is also possible to heat under pure oxygen.

The oxygen or oxygen-enriched air may be fed as a gas stream, preferably with an oxygen flowrate of 1 liter per hour and per gram agglomerate.

Heating is preferably conducted in two steps, namely a first step with a relatively fast temperature increase, and a second step with a slower temperature increase.

The maximum speed of temperature raising possible without damaging the green agglomerate depends on the binder and on the dimensions of the agglomerate.

The maximum temperature to which is heated depends on the oxygen-sensitivity of the powder.

Silicium and silicium nitride are preferably not heated above 450°C to prevent oxidation of the powder.

The first step may e.g. be conducted with a temperature increase about 50°C per hour up to about 100°C, whereafter the second step is conducted with a temperature increase about 5°C per hour up to a temperature about 350°C.

After removing the binder, the powder agglomerate is heated to the sintering temperature and the sintering proper is performed.

The invention will be further explained with reference to the following examples.

Example 1

Si powder with a mean grain size of 8.5 µm and a grain spectrum between 1 and 20 µm, is mixed with 17 weight-% (approximately 35 vol.-% of the total resulting mixture) binder comprised of 1/5th polyethylene and 4/5th wax mixture, and shaped by the usual method by injection-moulding, into sticks of 3.5×4.5×45 mm size, with a density of 1.52 g/cm³. The binder is then removed by heating the green powder agglomerate under an oxygen flow rate of 1 liter per hour per gram. Heating occurs according to the following heat cycles: In a first step, the temperature is raised at 50°C/h to 100°C. In a second step, the temperature is raised at 5°C/h to 350°C. This gives intact sticks, free from binder, which might thereafter be nitrided to silicium nitride by known techniques.

The same material treated according to the same heat cycle but under air, has to be heated up to 500°C to remove all the binder. There appeared thereby substantial damaging of the green powder agglomerate due to inner pressure build-up.

Example 2

The method according to Example 1 has been repeated by starting with a Si powder having a mean grain size of 0.6 µm and a grain spectrum between 0.1 and 20 µm. After heat processing under oxygen as in Example 1, intact sticks were obtained which were free from binder.

By heating under air, there occurred damaging of the green powder agglomerate.

Example 3

The powder from Example 2 has been shaped after adding 13 weight-% (approximately 27 vol.-% of the total resulting mixture) binder, by injection-moulding into sticks with a density of 1.67 g/cm³, and heat-treated as in Example 1. The binder-free sticks from green powder agglomerate were undamaged.

When heating under air instead of oxygen, damaging of the agglomerate did occur.

Example 4

Silicium nitride (Si₃N₄) powder with a mean grain size of 0.6 µm and a spectrum from 50 µm to 0.1 µm whereto 16.5 wt. % (approximately 40 vol.-% of the total resulting mixture) binder from Example 1 has been added, was shaped by injection-moulding into sticks of 3.5×4.5×45 mm size. The binder was removed under oxygen as in Example 1. The resulting sticks did show no faults.

Example 5

Aluminium oxide powder with a mean grain size of 2.5 µm and a spectrum from 45 µm to 0.1 µm whereto 18 wt. % (approximately 48 vol.-% of the total resulting mixture) binder from Example 1 was added, was shaped by injection-moulding into sticks of 3.5×4.5×45 mm size. The binder was removed under oxygen as in Example 1. The resulting sticks did show no faults.

Example 6

Stainless steel powder was shaped into sticks as in Example 1. After processing under oxygen as in Example 1, the sticks did show no faults.

Example 7

Silicium carbide powder with a mean grain size of 1.7 µm and a grain size span between 4 and 0.3 µm was shaped into sticks as in Example 1. After processing under oxygen as in Example 1, the sticks did show no faults.

Example 8

The Si-powder from Example 1 has been mixed with 13.3 wt. % (approximately 28 vol.-% of the total resulting mixture) binder consisting of 1/2 polypropylene and 1/2 of a mixture of waxes and other organic auxiliary products, and shaped by the usual method by injecting-moulding into sticks.

After treatment under oxygen as in Example 1, the resulting sticks did show no faults.

The invention is in no way limited to the above-described embodiments and within the scope of the patent application, many changes may be brought to the described embodiments, notably as regards the powders being used, the shaping techniques being used, the binders being used, and the heat cycles.

Use may be made as powder, notably also of other metal powders (notably iron), other ceramic powders (notably zirconium oxide and aluminium nitride), and mixtures thereof.

Claims

1. Method for manufacturing a sintered product, comprising:
—mixing a powder with 20 to 50 volume-% based on the total resulting mixture, of an organic binder which is comprised at least partly of an organic material, susceptible to oxidizing-thermic decomposition,
—shaping the mixture in the form of a green powder agglomerate to the desired shape,
—removing the binder at least partly from said green powder agglomerate, by heating same, and
—finally subjecting the green powder agglomerate to the sintering proper,
characterized in that removing the binder at least partly from the green powder agglomerate is performed by heating said agglomerate in an atmosphere the oxygen concentration of which is higher than in air.

2. Method as defined in claim 1, characterized in that removing the binder at least partly by heating said agglomerate is performed in an atmosphere with an oxygen concentration of at least 40 vol.-%.

3. Method as defined in claim 2, characterized in that removing the binder at least partly from the green powder agglomerate is performed by heating said agglomerate in an atmosphere of pure oxygen.

4. Method as defined in any one of claims 1 to 3, characterized in that removing the binder at least partly from the green powder agglomerate is performed by heating said agglomerate by means of a gas stream.

5. Method as defined in claim 4, characterized in that removing the binder at least partly from the green powder agglomerate is performed by heating said agglomerate by means of a gas stream with an oxygen flow-rate of 1 liter per hour per gram agglomerate.

6. Method as defined in any one of claims 1 to 5, characterized in that the powder agglomerate is heated in two steps, namely a first step with a relatively fast temperature increase, and a second step with a slower temperature increase.

7. Method as defined in claim 6, characterized in that during the first step is heated with a temperature increase about 50°C per hour up to about 100°C, and during the second step is heated with a temperature increase about 5°C per hour up to a temperature about 350°C.

8. Method as defined in any one of claims 1 to 7, characterized in that the powder is a Si-containing powder and is mixed with an amount organic binder between 13 and 18 weight-% based on the total mixture weight.

9. Method as defined in any one of claims 1 to 8, characterized in that the shaping of the mixture to the required shape is performed by injection-moulding.

**Patentansprüche**

1. Verfahren zur Herstellung eines gesinterten Formkörpers, umfassend:
—Mischung eines Pulvers mit 20 bis 50% in Volumen, aufgrund der entstehenden Gesamtmischung, eines organischen Bindemittels, welches zumindest zum Teil ein organisches Material umfasst, das für wärmeoxydierende Zersetzung fähig ist,
—Gestaltung der Mischung, in der Form eines grünen Pulveragglomerats, zur gewünschten Form,
—Aussonderung des Bindemittels zumindest zum Teil aus dem genannten grünen Pulveragglomerat, durch Erhitzen dieses letzten, und
—schliesslich, Unterwerfung des grünen Pulveragglomerats an der eigentlichen Versinterung,
dadurch gekennzeichnet, dass die Aussonderung des Bindemittels zumindest zur Teil aus dem grünen Pulveragglomerat erfolgt durch Erhitzen des genannten Agglomerats in einer Atmosphäre, deren Sauerstoffkonzentration grösser als in der Luft ist.

2. Verfahren nach Anspruch 1, dadurch gekennzeichnet, dass die Aussonderung des Bindemittels zumindest zum Teil durch Erhitzen des genannten Agglomerats erfolgt in einer Atmosphäre mit einer Sauerstoffkonzentration von mindestens 40% in Volumen.

3. Verfahren nach Anspruch 2, dadurch gekennzeichnet, dass die Aussonderung des Bindemittels zumindest zum Teil aus dem grünen Pulveragglomerat erfolgt durch Erhitzen des genannten Agglomerats in einer reinen Sauerstoffatmosphäre.

4. Verfahren nach irgendwelchem der Ansprüche 1 bis 3, dadurch gekennzeichnet, dass die Aussonderung des Bindemittels zumindest zum Teil aus dem grünen Pulveragglomerat erfolgt durch Erhitzen des genannten Agglomerats mittels eines Gasstroms.

5. Verfahren nach Anspruch 4, dadurch gekennzeichnet, dass die Aussonderung des Bindemittels zumindest zum Teil aus dem grünen Pulveragglomerat erfolgt durch Erhitzen des genannten Agglomerats mittels eines Gasstroms mit einer Sauerstoff Fördermenge von 1 Liter pro Stunde pro Gramm Agglomerat.

6. Verfahren nach irgendwelchem der Ansprüche 1 bis 5, dadurch gekennzeichnet, dass das Pulveragglomerat in zwei Stufen erhitzt wird, und zwar einer ersten Stufe mit einer relativ schnellen Temperaturerhöhung und einer zweiten Stufe mit einer langsameren Temperaturerhöhung.

7. Verfahren nach Anspruch 6, dadurch gekennzeichnet, dass während der ersten Stufe mit einer Temperaturerhöhung von ca. 50°C pro Stunde bis zu 100°C und während der zweiten Stufe mit einer Temperaturerhöhung von ca. 5°C pro Stunde bis zu einer Temperatur von ca. 350°C erhitzt wird.

8. Verfahren nach irgendwelchem der Ansprüche 1 bis 7, dadurch gekennzeichnet, dass das Pulver ein Si-haltiges Pulver ist und mit einer Menge von organischem Bindemittel von 13 bis 18% in Gewicht aufgrund des Gesamtmischungsgewichts gemischt wird.

9. Verfahren nach irgendwelchem der Ansprüche 1 bis 8, dadurch gekennzeichnet, dass die Gestaltung der Mischung zur gewünschten Form durch Spritzgiessen erfolgt.

**Revendications**

1. Procédé de fabrication d'un produit fritté, comprenant:
—mélange d'une poudre, avec 20 à 50% en volume sur base du mélange total qui en résulte, d'un liant organique comprenant au moins en partie une matière organique susceptible de décomposition par thermo-oxydation,
—façonnage du mélange, sous forme d'un aggloméré de poudre verte, à la forme désirée,
—élimination au moins en partie du liant dudit aggloméré de poudre verte, par échauffement de ce dernier, et
—finalement, soumission de l'aggloméré de poudre verte au frittage proprement-dit,
caractérisé en ce que l'élimination du liant au moins en partie de l'aggloméré de poudre verte est réalisée en échauffant ledit aggloméré dans

un atmosphère dont la concentration en oxygène est supérieure à celle dans l'air.

2. Procédé tel que défini à la revendication 1, caractérisé en ce que l'élimination du liant au moins en partie en échauffement ledit aggloméré est réalisée dans un milieu à concentration en oxygène d'au moins 40% en volume.

3. Procédé tel que défini à la revendication 2, caractérisé en ce que l'élimination du liant au moins en partie de l'aggloméré de poudre verte est réalisée en échauffant ledit aggloméré dans un milieu d'oxygène pur.

4. Procédé tel que défini à l'une ou l'autre des revendications 1 à 3, caractérisé en ce que l'élimination du liant au moins en partie de l'aggloméré de poudre verte est réalisée en échauffant ledit aggloméré à l'aide d'un flux de gaz.

5. Procédé tel que défini à la revendication 4, caractérisé en ce que l'élimination du liant au moins en partie de l'aggloméré de poudre verte est réalisée en échauffant ledit aggloméré à l'aide d'un flux de gas à un débit d'oxygène de 1 litre par heure par gramme d'aggloméré.

6. Procédé tel que défini à l'une ou l'autre des revendications 1 à 5, caractérisé en ce que l'aggloméré de poudre est échauffé en deux étapes, notamment une première étape avec une augmentation de température relativement rapide et une seconde étape avec une augmentation de température plus lente.

7. Procédé tel que défini à la revendication 6, caractérisé en ce que, au cours de la première étape il est chauffé avec une augmentation de température d'environ 50°C par heure, jusqu'à environ 100°C, au cours de la seconde étape, il est chauffé avec une augmentation de température d'environ 5°C par heure, jusqu'à une température d'environ 350°C.

8. Procédé tel que défini à l'une ou l'autre des revendications 1 à 7, caractérisé en ce que la poudre est une poudre contenant du Si et est mélangée avec une quantité de liant organique variant entre 13 et 18% en poids sur base du poids de mélange total.

9. Procédé tel que défini à l'une ou l'autre des revendications 1 à 8, caractérisé en ce que le façonnage du mélange à la forme requise est réalisé par moulage par injection.